# EUROPEAN PATENT SPECIFICATION

(11) **EP 2 750 007 B1**
(45) Date of publication and mention of the grant of the patent: **02.11.2022**
(21) Application number: 13193009.1
(22) Date of filing: 15.11.2013
(51) Int. Cl.: G06F 3/041, G06F 3/044, G02F 1/1333, G02F 1/1343

(54) **Array substrate and touch screen with horizontal electric field driving mode**
Array-Substrat und Berührungsbildschirm mit horizontalem Antriebsvorrichtungsmodus für ein elektrisches Feld
Substrat matriciel et écran tactile à mode de commande de champ électrique horizontal

(30) Priority: 31.12.2012 CN 201210592038
(43) Date of publication of application: 02.07.2014
(73) Proprietor: Shanghai Tianma Micro-electronics Co., Ltd., Pudong New District Shanghai 201201 (CN)
(72) Inventor: Ma, Jun, 201201 Shanghai (CN); Zhao, Lijun, 201201 Shanghai (CN); Yao, Qijun, 201201 Shanghai (CN)
(74) Representative: HGF

(56) References cited:
- AU-A4- 2012 101 248
- US-A1- 2003 098 939
- US-A1- 2009 059 110
- US-A1- 2011 109 568
- US-B2- 7 859 521

## Description

### Technical Field

The present invention relates to flat panel display technologies, in particular to an array substrate and a touch screen with a horizontal electric field driving mode.

### Technical Background

A touch screen built in a liquid crystal display can be integrated on a color filter substrate or an array substrate to reduce a thickness of an entire touch display device effectively, and hence is widely used. As for the liquid crystal display with a horizontal electric field driving mode such as a Fringe Field Switching (FFS) mode or an In-Plane Switching (IPS) mode, it is generally required for the In-Cell touch screen to arrange driving lines and sensing lines which are used for a touch function at one side of the color filter substrate.

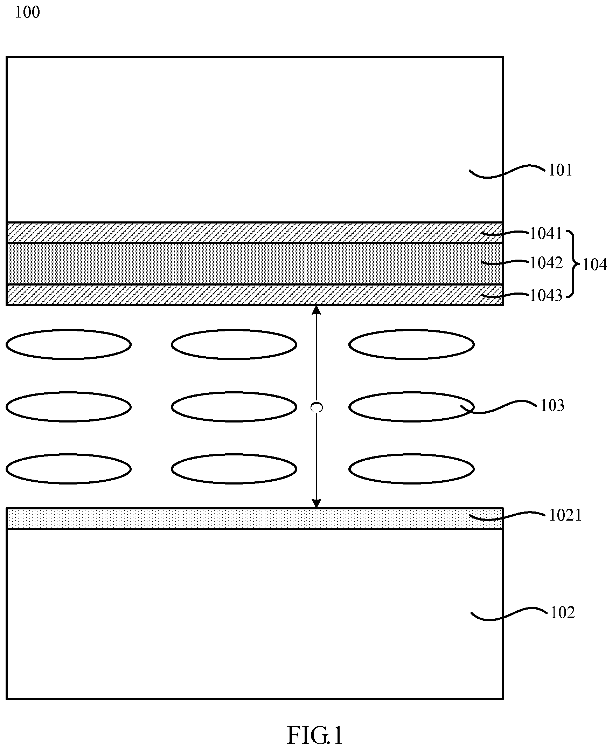

As shown in Figure 1, an FFS In-Cell touch screen 100 includes a color filter substrate 101, an array substrate 102, a liquid crystal layer 103 and a touch layer 104. The color filter substrate 101 and the array substrate 102 are arranged opposite to each other, the liquid crystal layer 103 is disposed between the color filter substrate 101 and the array substrate 102, and the touch layer 104 is integrated on the color filter substrate 101. The touch layer 104 includes a first metal layer 1041, a dielectric layer 1042 formed on the first metal layer 1041, and a second metal layer 1043 formed on the dielectric layer 1042, where, the first metal layer 1041 and the second metal layer 1043 are used as a driving electrode and a sensing electrode, respectively. It can be seen that a photoetching process is conducted three times on the color filter substrate 101 to form the first metal layer 1041, the dielectric layer 1042 and the second metal layer 1043, respectively, in order to form the above-described touch layer 104, leading to complicated processes and high production costs.

Furthermore, it can also be seen from Figure 1 that, in the FFS In-Cell touch screen 100, parasitic capacitance C is generated between the touch layer 104 formed on the color filter substrate 101 and a common electrode layer 1021 formed on the array substrate 102. The touch screen may be used to detect a touch signal during a touch. The liquid crystal layer 103 contributes to the parasitic capacitance C, that is, the liquid crystal layer 103 is a part of touch capacitance. When the FFS In-Cell touch screen 100 operates in a display state, liquid crystal molecules of the liquid crystal layer 103 are rotated continually causing a change in dielectric constant of the liquid crystal layer 103, and hence leading to a corresponding change in the touch capacitance. Thus, the liquid crystal layer 103 generates a touch noise of the touch capacitance. The touch noise generated by the liquid crystal layer 103 leads to the decreased touch sensitivity of the FFS In-Cell touch screen 100.

US7859521B2 discloses displays with touch sensing circuitry integrated into the display pixel stack-up. Circuit elements, such as touch signal lines, such as drive lines and sense lines, grounding regions, in the display pixel stackups can be grouped together to form touch sensing circuitry that senses a touch on or near the display. An integrated touch screen can include multi-function circuit elements that can operate as circuitry of the display system to generate an image on the display, and can also form part of a touch sensing system that senses one or more touches on or near the display. The multi-function circuit elements can be, for example, capacitors in display pixels that can be configured to operate as storage capacitors/electrodes, common electrodes, conductive wires/pathways, etc., of the display circuitry in the display system, and that may also be configured to operate as circuit elements of the touch sensing circuitry.

US2011109568A1 discloses a touch display apparatus. Without additional touch device, either the reversed AM structure or a conventional PM structure is provided to combine with the human body's conductive properties and the noise-immune sensing circuit design, thereby to achieve the purpose of displaying images and performing multi-touch detection simultaneously. Thus, the hardware cost and the power consumption are reduced. AU2012101248 (A4) teaches a device employing in-cell and/or on-cell touch sensor components. The touch sensor components include touch drive electrodes and touch sense electrodes. The touch drive electrodes and touch sense electrodes may be formed from dedicated touch drive electrodes and/or dedicated touch sense electrodes, and/or may be formed from one or more gate lines, one or more pixel electrodes, one or more common electrodes, one or more source lines, or one or more drains, or some combination of these elements. In particular, AU 2012 101 248 A4 discloses an array substrate with a horizontal electric field driving mode, comprising a plurality of common electrode lines formed on the substrate; and a plurality of gate lines formed on the substrate and a plurality of data lines intersecting with the gate lines; wherein a plurality of common electrode lines, consisting of common electrodes and wires connecting the common electrodes, are arranged perpendicular to the data lines, the plurality of common electrode lines are connected with each other, and the common electrode lines function as sensing electrodes or driving electrodes and the data lines function as the driving electrodes or the sensing electrodes, and wherein the array substrate with a horizontal electric field driving mode further comprises a plurality of pixel rows which formed by the plurality of data lines and the plurality of gate lines, each of the wires of the plurality of common electrode lines is arranged to overlap with one corresponding pixel row.

US2009059110 (A1) teaches a liquid crystal display device with a sufficiently large storage capacitor. The liquid crystal display device includes a first substrate and a second substrate. The first substrate has a laminated structure containing a first transparent electrode, a first insulating film, a second transparent electrode, a second insulating film, and a third transparent electrode which are laminated in this order. The first transparent electrode and the second transparent electrode are electrically insulated from each other and together form a first storage capacitor through the first insulating film, and the second transparent electrode and the third transparent electrode are electrically insulated from each other and together form a second storage capacitor through the second insulating film.

US2003098939A1 teaches a fringe field switching liquid crystal display (FFS-LCD). The FFS-LCD includes upper and lower substrates opposed to each other at a predetermined distance; a liquid crystal layer; a gate bus line; a data bus line; a gate insulating film intervened between the gate bus line and the data bus line; a thin film transistor; a counter electrode; a common signal line; a pixel electrode electrically connected with the thin film transistor and overlapped with the counter electrode; and a passivation film intervened between the counter electrode and the pixel electrode. The common signal line is formed on the gate insulating film and made of the same material as the data bus line.

### Summary of the Invention

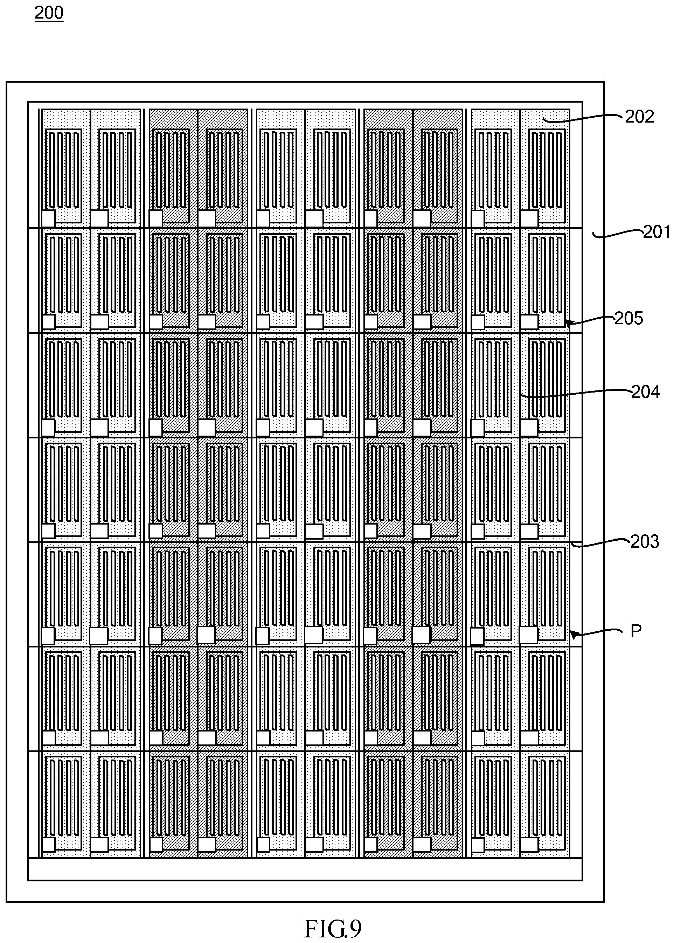

The present invention provides an array substrate and a touch screen with a horizontal electric field driving mode, to simplify a manufacturing process for an In-Cell touch screen with the horizontal electric field driving mode, thereby reducing production costs of the In-Cell touch screen. According to the invention an array substrate with a horizontal electric field driving mode according to independent claim 1, and a touch screen with a horizontal electric field driving mode according to claim 8 are provided. Further improvements and embodiments are provided in the dependent claims. The example disclosed in figure 9 is not part of the invention.

An object of the invention is to solve the problem of the touch noise generated by a liquid crystal layer of the touch screen with the horizontal electric field driving mode, thereby increasing the touch sensitivity of the touch screen.

Each of the common electrode lines has a width in a range from about 3 mm to about 5 mm.

The array substrate comprises a plurality of pixel rows and a plurality of pixel columns formed by the plurality of data lines and the plurality of gate lines.

### Description of Drawings

Figure 1 is a schematic view showing the structure of an FFS In-Cell touch screen in the prior art;
Figure 2 is a top view of an array substrate with an FSS mode according to a first embodiment of the invention;
Figure 3 is an enlarged partial view of a pixel region P of Figure 2;
Figure 4 is a sectional view along a line I-I' of Figure 3;
Figure 5 is a top view of an array substrate with an In-Plane Switching mode according to a second embodiment of the invention;
Figure 6 is an enlarged partial view of the pixel region P of Figure 5;
Figure 7 is a sectional view along a line I-I' of Figure 6;
Figure 8 is a top view of an array substrate with a horizontal electric field driving mode according to a third embodiment of the invention;
Figure 9 is a top view of an array substrate with the horizontal electric field driving mode according to a fourth example not forming part of the invention; and
Figure 10 a schematic view of the structure of a touch screen with the horizontal electric field driving mode according to a fifth embodiment of the invention.

### Detailed description of the Preferred Embodiments

The concept of the present invention lies in splitting an integral common electrode arranged on an array substrate with a horizontal electric field driving mode in the prior art to form a plurality of common electrode lines, which then also function as sensing electrodes or driving electrodes, meanwhile, data lines or gate lines also function as driving electrodes or sensing electrodes, for the purpose of integrating the touch function layer on the array substrate without increasing processing steps.

The improvements of the present invention are made on the array substrate with the EAT192BEP horizontal electric field driving mode, including a Fringe Field Switching mode or an In-Plane Switching mode, for example.

For a better understanding of the objects, solutions and advantages of the invention, the invention is described in detail below in conjunction with the accompanying drawings.

### First Embodiment

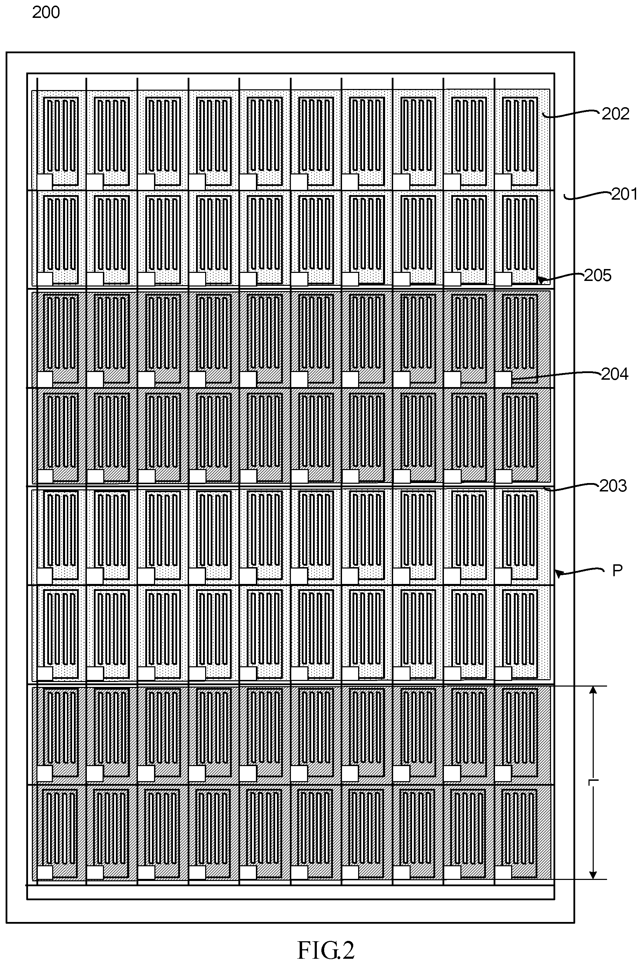

As shown in Figure 2, an array substrate 200 with a Fringe Field Switching mode according to a first embodiment includes a substrate 201, a plurality of common electrode lines 202 formed on the substrate 201, a plurality of gate lines 203 formed on the substrate 201, and a plurality of data lines 204 intersecting the gate lines 203, where an adjacent data line 204 and gate line 203 define a pixel region P. The width L of the common electrode line 202 can be selected as required, for example, the width of the common electrode line may range from 3 mm to 5 mm. For clarity of illustration, adjacent common electrode lines 202 have different shades as shown in Figure 2.

Further referring to Figure 2, the common electrode lines 202 are arranged perpendicular to the data lines 204. During a touch period, the common electrode lines 202 function as sensing electrodes for realizing a touch function, and the data lines 204 function as driving electrodes for realizing the touch function. Of course, it is also possible that the common electrode lines 202 function as the driving electrodes and the data lines 204 function as the sensing electrodes.

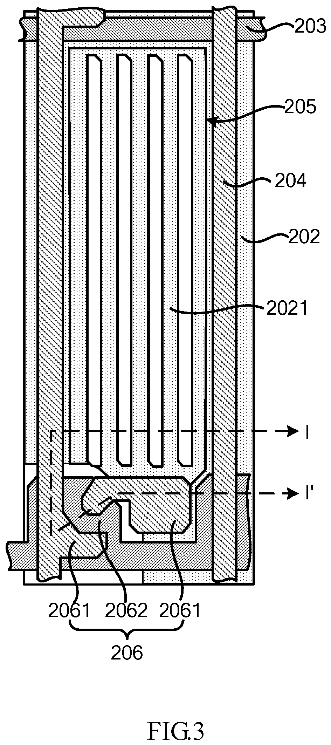

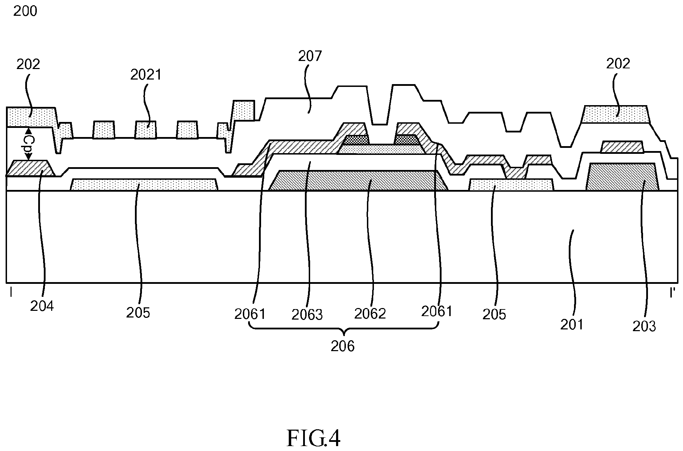

As shown in Figure 3 in combination with Figure 4, each pixel region P includes a pixel electrode 205 formed on the substrate 201, and the pixel electrode 205 is connected with one end of a source/drain 2061 of a thin film transistor 206 by a through-hole. The thin film transistor 206 also includes a gate 2062 and a gate insulation layer 2063 that are formed on the substrate 201, the gate 2062 is formed on the substrate 201, the gate insulation layer 2063 is formed on the gate 2062, the pixel electrode 205 and the substrate 201, and both the data lines 204 and the source/drain 2061 are formed on the gate insulation layer 2063. Here, the gate 2062 is connected with the gate lines 203, and the other end of the source/drain 2061 is connected with the data lines 204. Furthermore, a protect layer 207 is formed on the gate insulation layer 2063 of the thin film transistor 206, the data lines 204 and the source/drain 2061; the common electrode line 202 is formed on the protect layer 207 and split to form a plurality of pixel common electrodes 2021 in the pixel region P by an etching process, and the plurality of pixel common electrodes 2021 in the pixel region are all connected with the same common electrode line 202. Since the common electrode line 202 is arranged perpendicular to the data line 204, the common electrode line 202 certainly includes an area facing the data line 204, thereby forming a first capacitance Cp. The common electrode line 202 functions as the driving electrode or the sensing electrode while the data line functions as the sensing electrode or the driving electrode during the touch period, at this time, the first capacitance Cp functions as the touch capacitance.

In the first embodiment, the pixel electrode 205 is formed below the pixel common electrodes 2021, that is, the Top COM form is utilized. It should be understood that embodiments of the present invention are also applicable to the Bottom COM form, that is, the pixel common electrodes 202 are formed above the substrate 201, and the pixel electrode 205 is located above the protect layer 207.

### Second Embodiment

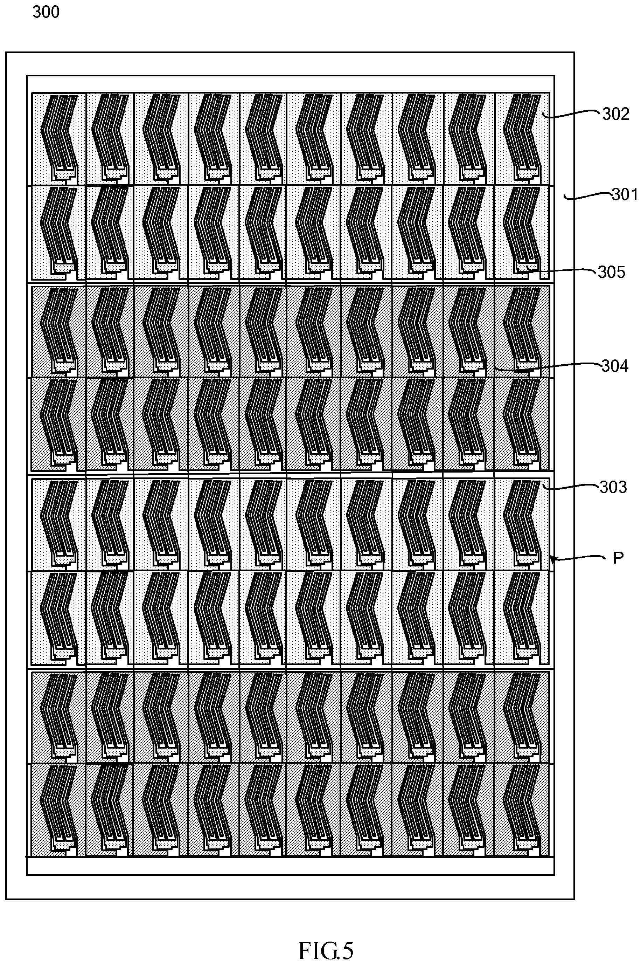

As described above, the concept of the present invention is applicable to any array substrate with a horizontal electric field driving mode. As shown in Figure 5, an array substrate 300 with an In-Plane Switching mode as provided in the second embodiment includes a substrate 301, a plurality of common electrode lines 302 formed on the substrate 301, a plurality of gate lines 303 formed on the substrate 301, and a plurality of data lines 304 intersecting with the gate lines 303, where a region defined by the adjacent data line 304 and gate line 303 is a pixel region P. The common electrode lines 302 are arranged perpendicular to the data lines 304. The common electrodes 302 function as sensing electrodes or driving electrodes for realizing the touch function and the data lines 304 function as the driving electrodes or the sensing electrodes for realizing the touch function during a touch period.

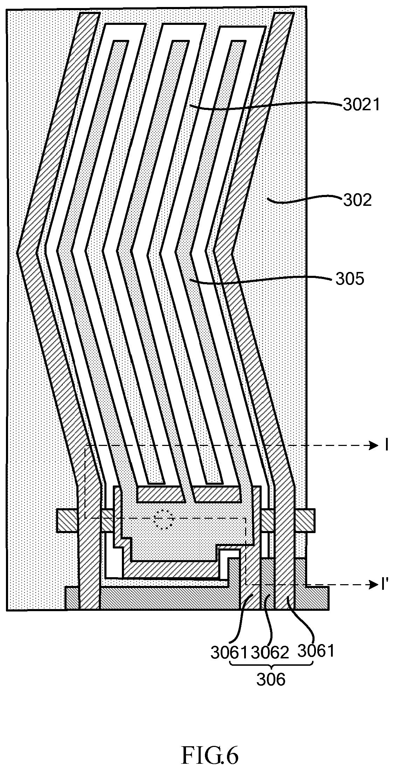

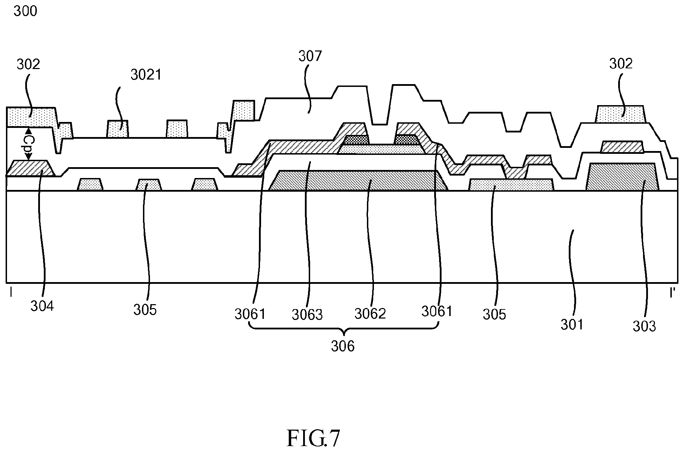

As shown in Figures 6 and 7, each pixel region P includes a plurality of pixel electrodes 305 connected together. The pixel electrodes 305 are formed on the substrate 301 and connected with one end of a source/drain 3061 of a thin film transistor 306 via a through hole. The thin film transistor 306 also includes a gate 3062 and a gate insulation layer 3063 formed on the substrate 301, the gate 3062 is formed on the substrate 301, the gate insulation layer 3063 is formed on the gate 3062, the pixel electrodes 305 and the substrate 301, and both the data lines 304 and the source/drain 3061 are formed on the gate insulation layer 3063. Here, the gate 3062 is connected with the gate lines 303, the other end of the source/drain 3061 is connected with the data lines 304. Furthermore, a protect layer 307 is formed on the gate insulation layer 3063 of the thin film transistor 306, the data lines 304 and the source/drain 3061, the common electrode line 302 is formed on the protect layer 307 and split to form a plurality of pixel common electrodes 3021 in the pixel region P by an etching process, and the plurality of pixel common electrodes 3021 in the pixel region are all connected with the same common electrode line 302.

As shown in Figure 7, in the array substrate 300 with the horizontal electric field driving mode, a horizontal electric field is generated between each of the plurality of pixel common electrodes 3021 and each of the pixel electrodes 305 in each pixel region, and drives liquid crystal molecules above the substrate 300 to rotate.

It should be understood that the concept of the present invention is also applicable to any other array substrates with the horizontal electric field driving mode.

### Third Embodiment

The third embodiment is different from the first and second embodiments by having different line widths of the common electrode lines, i.e., different numbers of the common electrode lines split from the entire common electrode as compared with the prior art .

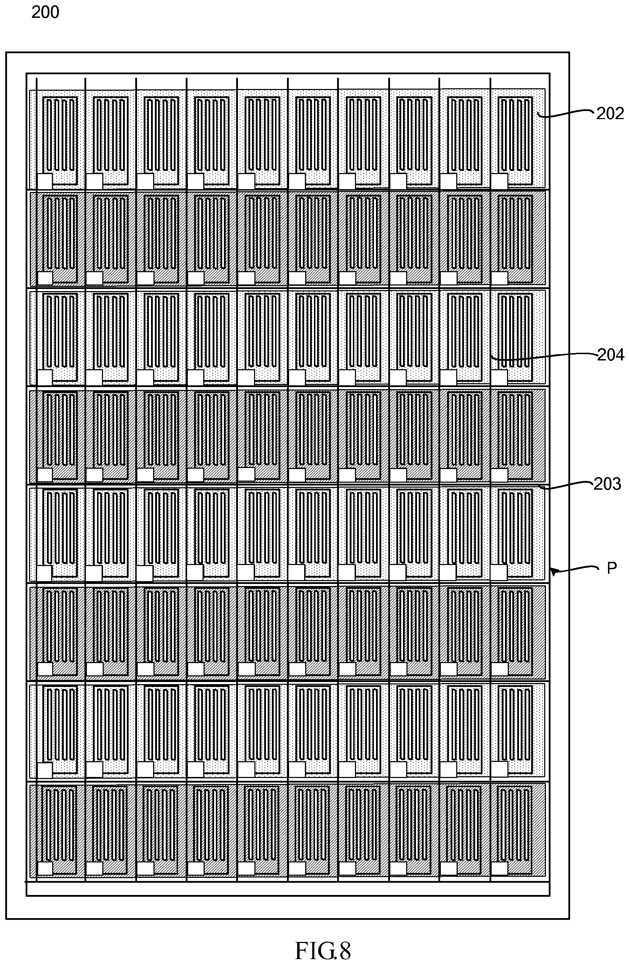

Specifically, as shown in Figure 8, on an array substrate 200 with a horizontal electric field driving mode according to this embodiment, a plurality of pixel rows and a plurality of pixel columns are formed by the plurality of data lines 204 and the plurality of gate lines 203. The common electrode lines 202 are arranged to overlap with the pixel rows or pixel columns, that is, each of the common electrode lines 202 is corresponds to one pixel row.

Since each of the common electrode lines 202 corresponds to one pixel row, the touch function during a touch period does not affect the function of the common electrode 202 as a storage capacitance when the common electrode 202 operates in a display period, thereby optimizing the display effect. Further, when the common electrode line 202 is arranged to overlap with the pixel rows or pixel columns, other inversion manners other than a Dot Inversion can be used for display driving, thereby reducing the power consumption of a display device.

### Fourth Example

This example, not forming part of the invention, is different from the above-mentioned first, second and third embodiments by that the data lines function as driving electrodes or sensing electrodes in the first, second and third embodiments, but gate lines function as the driving electrodes or the sensing electrodes in the fourth embodiment.

As shown in Figure 9, an array substrate 200 with a horizontal electric field driving mode includes a substrate 201, a plurality of common electrode lines 202 formed on the substrate 201, a plurality of gate lines 203 formed on the substrate 201, and data lines 204 intersecting the gate lines 203, where a region defined by the adjacent data line 204 and gate line 203 is a pixel region P.

Further referring to Figure 9, the common electrode lines 202 are arranged perpendicular to the gate lines 203. The common electrode lines 202 function as sensing EAT192BEP electrodes for realizing a touch function and the gate lines 203 function as driving electrodes for realizing the touch function during a touch period. Of course, it is also possible that the common electrode lines 202 function as the driving electrodes and the gate lines 203 function as the sensing electrodes.

### Fifth Embodiment

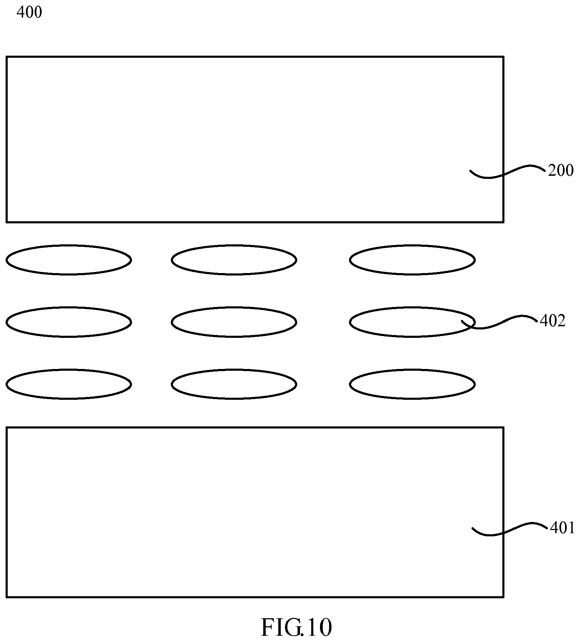

As shown in Figure 10, embodiments of the present invention also provides a touch screen 400 with a horizontal electric field driving, which includes an array substrate 200 with an FFS driving mode or an array substrate 300 with an IPS driving mode as provided in any one of the first, second, third and fourth embodiments, a color filter substrate 401, and a liquid crystal layer 402 disposed between the array substrate 200 and the color filter substrate 401.

In order to further optimize the touch effect, a surface of the array substrate 200 that faces the user is arranged as a touch surface, so that the liquid crystal layer 402 is not involved in the capacitance generated between a finger of the user and the touch layer, thus the noise carried by a touch signal generated between the finger of the user and the touch layer is reduced.

As can be seen, in the above-mentioned touch screen with the horizontal electric field driving mode, the common electrode arranged on the array substrate is split to form a plurality of common electrode lines, which function as the sensing electrodes or the driving electrodes while the data lines or the gate lines function as the driving electrodes or the sensing electrodes during a touch period. That is, the common electrode lines function as the sensing electrodes or the driving electrodes during the touch period, and function as the common electrode during a display period. Likewise, the data lines or the gate lines function as the driving electrodes or the sensing electrodes during the touch period function as the data lines or gate lines in the display period. Therefore, no additional process is required to form the touch layer, and both the display function and the touch function are implemented, so that the process is simplified significantly and production costs are reduced greatly.

In another aspect, since the common electrode lines, the data lines or the gate lines used for implementing the touch function are all located on the same array substrate, a metal layer used as the touch layer is no longer required on the color filter substrate, and the parasitic capacitance involving the liquid crystal layer is not generated between the array substrate and the color filter substrate, therefore, the detection of the touch capacitance is not affected by the rotation of the liquid crystal molecules in the driving electric field, that is, the rotation of the liquid crystal molecules no longer generates the touch noise, as a result, the touch sensitivity of the touch screen can be improved effectively.

It should be noted that, embodiments are described in a step-up way in the description, that is, differences of each embodiment from the previous embodiments are described, but reference may be made to the previous embodiments for any identical or similar parts of each embodiment with respect to the previous embodiments.

In another aspect, since the common electrode lines, the data lines or the gate lines used for implementing the touch function are all located on the same array substrate, a metal layer used as the touch layer is no longer required on the color filter substrate, and the parasitic capacitance involving the liquid crystal layer is not generated between the array substrate and the color filter substrate, therefore, the detection of the touch capacitance is not affected by the rotation of the liquid crystal molecules in the driving electric field, that is, the rotation of the liquid crystal molecules no longer generates the touch noise, as a result, the touch sensitivity of the touch screen can be improved effectively.

## Claims

1. An array substrate (200, 300) with a horizontal electric field driving mode, comprising:
a substrate (201, 301);
a plurality of common electrode lines (202, 302) formed on the substrate; and
a plurality of gate lines (203, 303) formed on the substrate and a plurality of data lines (204, 304) intersecting with the gate lines; wherein
the plurality of common electrode lines (202, 302) are arranged perpendicular to the data lines (204, 304),
the plurality of common electrode lines (202, 302) are not connected with each other,
each of the plurality of common electrode lines (202, 302) has a width (L) in a range from about 3 mm to about 5 mm, and
the common electrode lines (202, 302) function as sensing electrodes or driving electrodes and the data lines (204, 304) function as the driving electrodes or the sensing electrodes during a touch period, and wherein
the array substrate (200, 300) with a horizontal electric field driving mode further comprises
a plurality of pixel rows and a plurality of pixel columns formed by the plurality of data lines (204) and the plurality of gate lines (203), each of the plurality of common electrode lines (202) is arranged to overlap with one or a plurality of corresponding pixel rows.

2. The array substrate (200, 300) with the horizontal electric field driving mode of claim 1, wherein, the common electrode lines (202, 302) function as the sensing electrodes and the data lines (204, 304) function as the driving electrodes during the touch period.

3. The array substrate (200, 300) with the horizontal electric field driving mode of claim 1, wherein, the common electrode lines (202, 302) function as the driving electrodes and the data lines (204, 304) function as the sensing electrodes during the touch period.

4. The array substrate (200, 300) with the horizontal electric field driving mode of claim 1, wherein, each of the common electrode lines (202, 302) has a width (L) in a range from 3mm to 5mm.

5. The array substrate (200, 300) with the horizontal electric field driving mode of claim 1, wherein, a data line (204, 304) and a gate line (203, 303) adjacent to each other defines a pixel region (P) including a pixel electrode (205, 305).

6. The array substrate (200, 300) with the horizontal electric field driving mode of claim 5, wherein, the pixel region (P) comprises a plurality of pixel common electrodes (2021, 3021) connected together.

7. The array substrate (200, 300) with the horizontal electric field driving mode of claim 6, wherein, the pixel electrode (205, 305) is formed above or below the pixel common electrodes (2021, 3021).

8. A touch screen (400) with a horizontal electric field driving mode, comprising:
an array substrate (200, 300) with the horizontal electric field driving mode according to any one of claims 1 to 7, a color filter substrate (401), and a liquid crystal layer (402) disposed between the array substrate (200, 300) and the color filter substrate (401).

9. The touch screen (400) with the horizontal electric field driving mode of claim 8, wherein, the array substrate (200, 300) comprises a touch surface facing a user.

## Patentansprüche

1. Array-Substrat (200, 300) mit einem horizontalen Ansteuerungsmodus für ein elektrisches Feld, aufweisend:
ein Substrat (201, 301);
eine Vielzahl von gemeinsamen Elektrodenleitungen (202, 302), die auf dem Substrat gebildet sind; und
eine Vielzahl von Gate-Leitungen (203, 303), die auf dem Substrat gebildet sind, und eine Vielzahl von Datenleitungen (204, 304), die sich mit den Gate-Leitungen überschneiden; wobei
die Vielzahl der gemeinsamen Elektrodenleitungen (202 302) senkrecht zu den Datenleitungen (204, 304) angeordnet sind,
die Vielzahl der gemeinsamen Elektrodenleitungen (202, 302) nicht miteinander verbunden sind,
jede der Vielzahl der gemeinsamen Elektrodenleitungen (202, 302) eine Breite (L) in einem Bereich von ca. 3 mm bis ca. 5 mm hat, und
während eines Berührungszeitraums die gemeinsamen Elektrodenleitungen (202, 302) als Abtastelektroden oder als Ansteuerungselektroden fungieren und die Datenleitungen (204, 304) als Ansteuerungselektroden oder Abtastelektroden fungieren, und wobei
das Array-Substrat (200, 300) mit einem horizontalen Ansteuerungsmodus für ein elektrisches Feld darüber hinaus eine Vielzahl von Pixelzeilen und eine Vielzahl von Pixelspalten aufweist, die durch die Vielzahl der Datenleitungen (204) und die Vielzahl der Gate-Leitungen (203) gebildet sind, wobei jede aus der Vielzahl der gemeinsamen Elektrodenleitungen (202) so angeordnet ist, dass sie sich mit einer oder einer Vielzahl von entsprechenden Pixelzeilen überlappt.

2. Array-Substrat (200, 300) mit einem horizontalen Ansteuerungsmodus für ein elektrisches Feld nach Anspruch 1, wobei während des Berührungszeitraums die gemeinsamen Elektrodenleitungen (202, 302) als Abtastelektroden und die Datenleitungen (204, 304) als Ansteuerungselektroden fungieren.

3. Array-Substrat (200, 300) mit einem horizontalen Ansteuerungsmodus für ein elektrisches Feld nach Anspruch 1, wobei während des Berührungszeitraums die gemeinsamen Elektrodenleitungen (202, 302) als Ansteuerungselektroden und die Datenleitungen (204, 304) als Abtastelektroden fungieren.

4. Array-Substrat (200, 300) mit einem horizontalen Ansteuerungsmodus für ein elektrisches Feld nach Anspruch 1, wobei jede der gemeinsamen Elektrodenleitungen (202, 302) eine Breite (L) in einem Bereich von 3 mm bis 5 mm hat.

5. Array-Substrat (200, 300) mit einem horizontalen Ansteuerungsmodus für ein elektrisches Feld nach Anspruch 1, wobei eine Datenleitung (204, 304) und eine Gate-Leitung (203, 303), die zueinander benachbart sind, einen Pixelbereich (P) definieren, der eine Pixelelektrode (205, 305) enthält.

6. Array-Substrat (200, 300) mit einem horizontalen Ansteuerungsmodus für ein elektrisches Feld nach Anspruch 5, wobei der Pixelbereich (P) eine Vielzahl von gemeinsamen Pixelelektroden (2021, 3021) aufweist, die miteinander verbunden sind.

7. Array-Substrat (200, 300) mit einem horizontalen Ansteuerungsmodus für ein elektrisches Feld nach Anspruch 6, wobei die Pixelelektrode (205, 305) über oder unter den gemeinsamen Pixelelektroden (2021, 3021) gebildet ist.

8. Berührungsbildschirm (400) mit einem horizontalen Ansteuerungsmodus für ein elektrisches Feld, aufweisend:
ein Array-Substrat (200, 300) mit einem horizontalen Ansteuerungsmodus für ein elektrisches Feld nach einem der Ansprüche 1 bis 7, ein Farbfiltersubstrat (401) und eine Flüssigkristallschicht (402), die zwischen dem Array-Substrat (200, 300) und dem Farbfiltersubstrat (401) vorgesehen ist.

9. Berührungsbildschirm (400) mit einem horizontalen Ansteuerungsmodus für ein elektrisches Feld nach Anspruch 8, wobei das Array-Substrat (200, 300) eine einem Benutzer zugewandte Berührungsoberfläche aufweist.

## Revendications

1. Substrat matriciel (200, 300) à mode de commande de champ électrique horizontal, comprenant :
un substrat (201, 301) ;
une pluralité de lignes d'électrodes communes (202, 302) formées sur le substrat ; et
une pluralité de lignes de grilles (203, 303) formées sur le substrat et une pluralité de lignes de données (204, 304) croisant les lignes de grilles ; sachant que
la pluralité de lignes d'électrodes communes (202, 302) sont agencées perpendiculairement aux lignes de données (204, 304),
la pluralité de lignes d'électrodes communes (202, 302) ne sont pas reliées les unes aux autres,
chacune de la pluralité de lignes d'électrodes communes (202, 302) a une largeur (L) comprise dans une plage d'environ 3 mm à environ 5 mm, et
les lignes d'électrodes communes (202, 302) fonctionnent comme électrodes de détection ou électrodes de commande et les lignes de données (204, 304) fonctionnent comme les électrodes de commande ou les électrodes de détection pendant une période tactile, et sachant que
le substrat matriciel (200, 300) à mode de commande de champ électrique horizontal comprend en outre une pluralité de rangées de pixels et une pluralité de colonnes de pixels formées par la pluralité de lignes de données (204) et la pluralité de lignes de grilles (203), chacune de la pluralité de lignes d'électrodes communes (202) est agencée pour se superposer à l'une ou une pluralité de rangées de pixels correspondantes.

2. Le substrat matriciel (200, 300) à mode de commande de champ électrique horizontal de la revendication 1, sachant que les lignes d'électrodes communes (202, 302) fonctionnent comme les électrodes de détection et les lignes de données (204, 304) fonctionnent comme les électrodes de commande pendant la période tactile.

3. Le substrat matriciel (200, 300) à mode de commande de champ électrique horizontal de la revendication 1, sachant que les lignes d'électrodes communes (202, 302) fonctionnent comme les électrodes de commande et les lignes de données (204, 304) fonctionnent comme les électrodes de détection pendant la période tactile.

4. Le substrat matriciel (200, 300) à mode de commande de champ électrique horizontal de la revendication 1, sachant que chacune des lignes d'électrodes communes (202, 302) a une largeur (L) comprise dans une plage de 3 mm à 5 mm.

5. Le substrat matriciel (200, 300) à mode de commande de champ électrique horizontal de la revendication 1, sachant qu'une ligne de données (204, 304) et une ligne de grilles (203, 303) adjacentes l'une à l'autre définissent une région de pixel (P) incluant une électrode de pixel (205, 305).

6. Le substrat matriciel (200, 300) à mode de commande de champ électrique horizontal de la revendication 1, sachant que la région de pixel (P) comprend une pluralité d'électrodes communes de pixel (2021, 3021) reliées ensemble.

7. Le substrat matriciel (200, 300) à mode de commande de champ électrique horizontal de la revendication 6, sachant que l'électrode de pixel (205, 305) est formée au-dessus ou en-dessous des électrodes communes de pixel (2021, 3021).

8. Écran tactile (400) à mode de commande de champ électrique horizontal, comprenant :
un substrat matriciel (200, 300) à mode de commande de champ électrique horizontal selon l'une quelconque des revendications 1 à 7, un substrat de filtre couleur (401), une couche de cristaux liquides (402) disposée entre le substrat matriciel (200, 300) et le substrat de filtre couleur (401).

9. L'écran tactile (400) à mode de commande de champ électrique horizontal de la revendication 8, sachant que le substrat matriciel (200, 300) comprend une surface tactile faisant face à un utilisateur.
